# EUROPEAN PATENT APPLICATION

(11) **EP 2 120 223 A1**
(43) Date of publication of application: **18.11.2009**
(21) Application number: 08721404.5
(22) Date of filing: 05.03.2008
(51) Int. Cl.: G07G 1/01, A47F 9/02, G06F 3/041, G07G 1/12

(54) **COMMERCIAL PRODUCT REGISTRATION PROCESSING APPARATUS INTEGRATED WITH COUNTER**

(30) Priority: 05.03.2007 JP 2007054791
(71) Applicant: Toshiba TEC Kabushiki Kaisha, Tokyo 141-8664 (JP)
(72) Inventor: HIRAMATSU, Kenya, Shinagawa-ku Tokyo 141-8664 (JP); WATANABE, Hirokazu, Shinagawa-ku Tokyo 141-8664 (JP); WAKASUGI, Koichi, Koto-ku Tokyo (JP); INOUE, Yuji, Koto-ku Tokyo (JP); OKAMOTO, Atsuo, Koto-ku Tokyo (JP); UCHIDA, Akira, Koto-ku Tokyo (JP); MAEDA, Yuko, Koto-ku Tokyo (JP)
(74) Representative: Kramer - Barske - Schmidtchen
(86) International application number: PCT/JP2008/053984
(87) International publication number: WO 2008/108414

(57) **Abstract**

One of the sales-promotion information items stored is selected and displayed on the dedicated second customer-use display unit 5 provided on the upper surface of the counter 1.

## Description

### Technical Field

The present invention relates to a counter-type merchandise registration apparatus for use in selling merchandise in, for example, shops.

### Background Art

In shops such as supermarkets, register counters are set near the entrance. At each register counter, a customer may put the basket containing the goods he or she has selected to buy, and waits until the cashier at the counters finishes registering the goods.

Until the cashier finishes registering the goods, the customer cannot help but keep waiting, just killing time. In view of this, a register counter has been developed, which has an advertisement panel. The panel displays information (images and characters) advertising various items of merchandise to the customer who is waiting at the register counter, thus achieving an advertisement effect. (See, for example, Jpn. Pat. Appln. KOKAI Publication No. 2005-95362.)

### Disclosure of Invention

The contents of the advertisement that the above-described register counter can show are limited to information displayed on the advertisement panel. The advertisement panel may be replaced by another type. In this case, however, various types of panels must be provided for each register counter. Further, labor is required first to select one panel from the several provided, and then to replace the panel with the panel just selected. This labor is tough for the cashier or a maintenance staff member working for the shop.

The conventional register counter and the display provided on it are located between the cashier and the customer, possibly hindering the merchandise-cash exchange between the cashier and the customer.

This invention has been made in view of the foregoing. An object of one embodiment of this invention is to provide a counter-type merchandise registration apparatus that can achieve various advertisement effects without imposing a work load on the cashier or maintenance staff member, and can yet help to facilitate the merchandise-cash exchange between the cashier and the customer, thus increasing the transaction efficiency in the shop.

A counter-type merchandise registration apparatus according to an aspect of this invention comprises: a counter having an upper surface: an operator-use registration menu display unit of touch-panel type, provided flush with the upper surface of the counter; a first customer-use display unit provided flush with the upper surface of the counter and configured to display guidance information for customers and information about registering items of merchandise; a second customer-use display unit provided flush with the upper surface of the counter and configured to display sales-promotion information to customers; storage means storing a plurality of sales-promotion information items; and a control unit configured to select a sales-promotion information item from the storage means and to cause the second customer-use display unit to display the sales-promotion information item selected.

### Brief Description of Drawings

FIG. 1 is a diagram showing a counter according to one embodiment, as viewed from above;
FIG. 2 is a block diagram showing the controlling circuit of the embodiment;
FIG. 3 is a flowchart explaining how the operation sequence of the embodiment operates;
FIG. 4 is a diagram showing how the embodiment attends to the first customer for the day;
FIG. 5 is a diagram showing how the embodiment registers the items of merchandise the customer has selected;
FIG. 6 is a diagram showing how the embodiment displays the total amount the customer should pay for the items of merchandise he or she has selected;
FIG. 7 is a diagram showing how the data displayed is switched and how the operator moves when a transaction is settled;
FIG. 8 is a diagram showing the format in which data is stored in the sales-promotion information storage area of the embodiment;
FIG. 9 is a diagram showing how the embodiment attends to the last customer for the day;
FIG. 10 is a sectional view of a modification of the embodiment;
FIG. 11 is a sectional view of a another modification of the embodiment; and
FIG. 12 is a sectional view of the modification shown in FIG. 11, as viewed in a different direction.

### Best Mode for Carrying Out the Invention

One embodiment of this invention will be described with reference to the accompanying drawings.

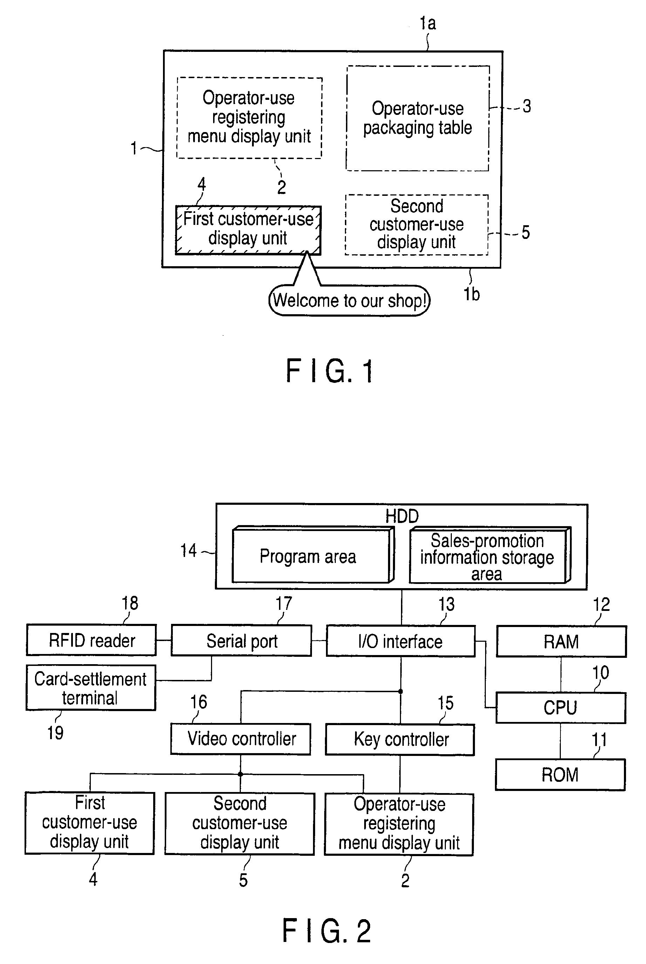

FIG. 1 is a diagram showing a counter-type merchandise registration apparatus 1 for use as a point-of-sales (POS) terminal in shops, as viewed from above.

The counter-type merchandise registration apparatus 1 (hereinafter called "counter") has a housing that is a rectangular box. On the upper surface of the housing, an operator-use registration menu display unit 2, an operator-use packaging table 3, a first customer-use display unit 4, and a second customer-use display unit 5 are arranged in one plane. The operator-use registration menu display unit 2 is a touch panel display that displays a registration menu the operator may use to register items of merchandise sold. The operator-use packaging table 3 is a touch panel display, too, which displays a packaging menu the operator may use to package items of merchandise sold. The first customer-use display unit 4 displays the data about the items of merchandise registered. The second customer-use display unit 5 displays advertisements helpful to the customer. The display units 2, 3, 4 and 5 keep displaying information as long as the counter 1 is operating. The upper surface displaying information when the power switch of the apparatus is turned off.

The upper surface of the counter 1 has one side 1a at which the operator may stand, and the other side 1b at which the customer stands. The operator-use registration menu display unit 2 and the operator-use packaging table 3 are arranged along the side la, adjacent to each other. The first customer-use display unit 4 and the second customer-use display unit 5 are arranged along the side 1b, adjacent to each other.

In particular, the first customer use display unit 4 is located before the customer who stands, facing the operator who in turn stands at the operator-se registration menu display unit 2. The second customer-use display unit 5 is located in front of the customer who stands, facing the operator who in turn sands at the operator-use packaging table 3.

FIG. 2 shows the control circuit of the counter-type merchandise registration apparatus that is configured as described above.

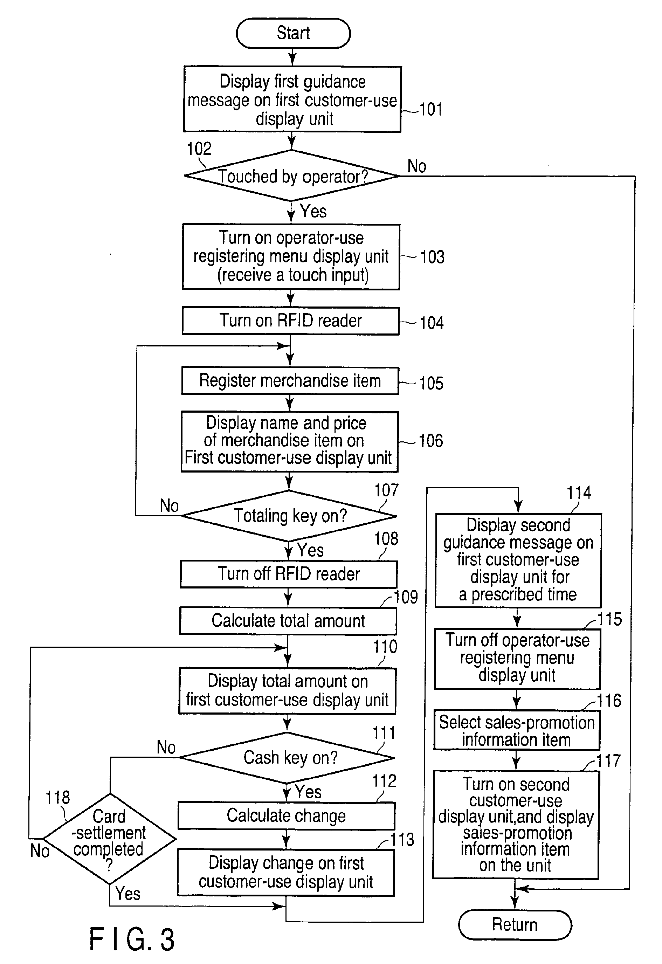

As shown in FIG. 3, the control circuit comprises a central processing unit (CPU) 10, a ROM 11, a RAM 12, and an I/O interface 13. The ROM 11, RAM 12 and I/O interface 13 are connected to the CPU 10. The ROM 11 stores control programs. The RAM 12 is provided to store data. The control circuit further comprises a hard disk drive (HDD) 14, a key controller 15, a video controller 16, and a serial port 17, which are connected to the I/O interface 13. The hard disk drive 14 is a storage means. An RFID reader 18 and a card-settlement terminal 19 are connected to the serial port 17. The RFID reader 18 can read data from items of merchandise.

The hard disk drive (HDD) 14 has a program area and a sales-promotion information storage area. The program area holds application programs, and the like. The sales-promotion information storage area holds a number of sales-promotion information items.

The key controller 15 acquires the input data that the operator input as he or she touches various key patterns displayed on the operator-use registration menu display unit 2. The input data acquired is supplied from the key controller 15 to the CPU 10. In accordance with commands coming from the CPU 10, the video controller 16 turns on or off the operator-use registration menu display unit 2 and first customer-use display unit 4 and controls the data items the display units 2 and 4 display when they are turned on.

The RFID reader 18 is provided inside in the operator-use packaging table 3. It communicates, by radio, with the IC tag attached to the item of merchandise placed on the operator-use packaging table 3, reading the merchandise data stored in the IC tag. The merchandise data, thus read, is supplied from the RFID reader 18 to the CPU 10.

The CPU 10 has, as main functions, the following two means (1) and (2):
(1) A control means that keeps the first customer-use display unit 4 on at all times, turns on the operator-use registration menu display unit 2 when the operator touches the operator-use registration menu display unit 2, and turns the same and the second customer-use display unit 5 off and on, respectively, when the operator performs a settlement process at the operator-use registration menu display unit 2.
(2) A control means that selects the sales-promotion information item related to the merchandise data read by the RFID reader 18, from many sales-promotion information items stored in the sales-promotion information storage area, when the second customer-use display unit 5 is turned on, reads the sales-promotion information item selected, and causes the second customer-use display unit 5 to display this sales-promotion information item.

How the counter 1 so configured as described above operates will be explained below, with reference to the flowchart of FIG. 3.

During an idling period when no customers stand at the counter 1, the first customer-use display unit 4 keeps on, displaying information, as the thick lines and shading indicate in FIG. 1. That is, the first customer-use display unit 4 displays a first guidance message "Welcome to our shop" (Step 101). At this point, the operator-use registration menu display unit 2 and the second customer-use display unit 5 remain off, displaying no information, as the broken lines indicate in FIG. 1.

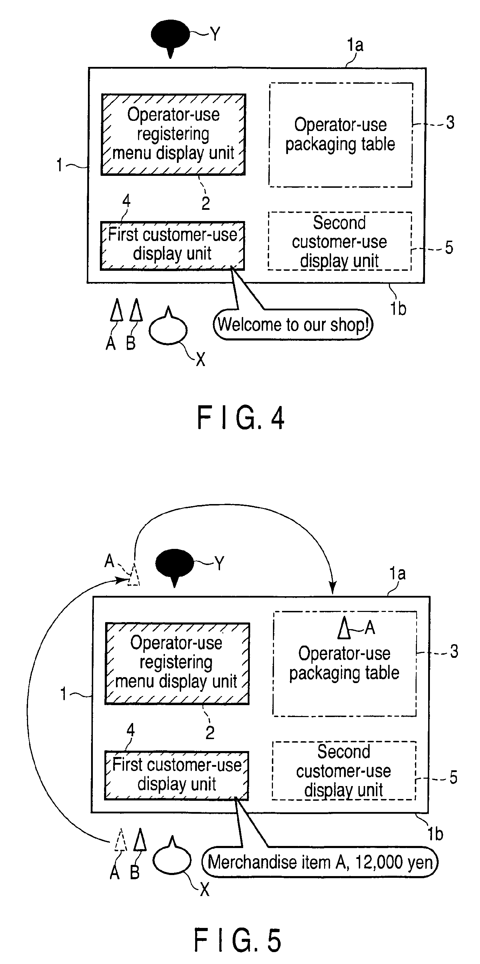

When a customer holding items of merchandise A and B comes, standing in front of the first customer-use display unit 4 as shown in FIG. 4, the operator who stands at the operator-use registration menu display unit 2, touches the operator-use registration menu display unit 2 (YES in Step 102). The operator-use registration menu display unit 2 is thereby turned on (Step 103). The operator-use registration menu display unit 2 starts displaying information (as indicated by the thick lines and shading in FIG. 4). This enables the operator to input data by touching the operator-use registration menu display unit 2. At the same time, the RFID reader 18 provided inside in the operator-use packaging table 3 is turned on (Step 104).

As the arrow indicates in FIG. 5, the operator Y receives item of merchandise A from the customer and moves item A to the operator-use packaging table 3. The RFID reader 18 reads the merchandise data from the IC tag attached to item of merchandise A. The merchandise data thus read is registered (Step 105). The merchandise data includes the name and price of item of merchandise A, for example "Merchandise A, 12,000 yen," which is displayed by the first customer-use display unit 4 (Step 106). Similarly, item of merchandise B is moved to the operator-use packaging table 3. The merchandise data about item of merchandise B is registered. The first customer-use display unit 4 displays the name and price of item of merchandise B.

When the operator Y touches the totalization key displayed on the operator-use registration menu display unit 2 (YES in Step 107), the RFID reader 18 upper surfaces operating (Step S108). The total amount is calculated (Step 109). At this point, the first customer-use display unit 4 displays the total amount for items of merchandise A and B purchased, for example "30,000 yen" (Step 110).

The customer X gives cash to the operator Y. The operator Y first inputs the amount received at the operator-use registration menu display unit 2 and then touches the cash key displayed on the operator-use registration menu display unit 2. (YES in Step 111). The change is calculated (Step 112). The change calculated is displayed on the first customer-use display unit 4 (Step 113).

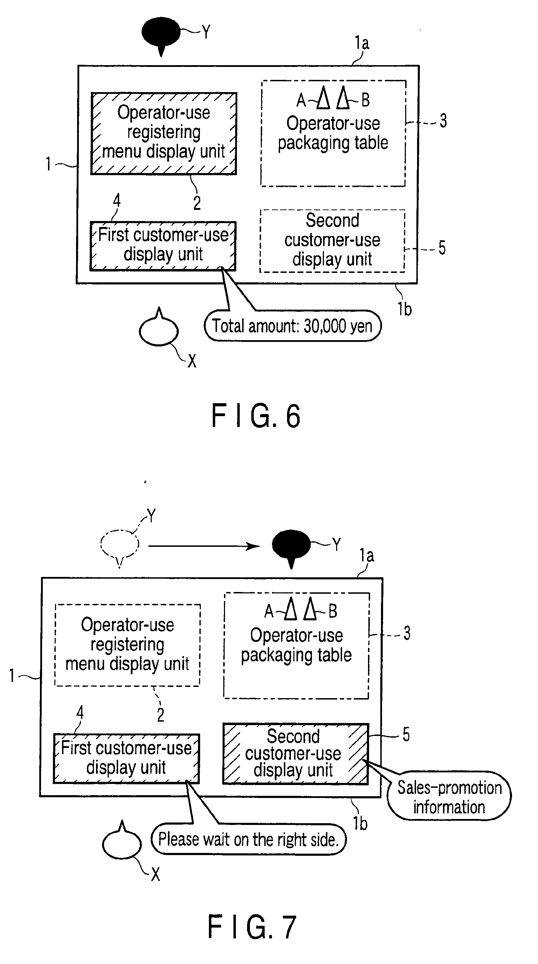

When the operator Y touches the cash key, the settlement process is performed. At this point, the first customer-use display unit 4 displays a second guidance message "Please wait on the right side" as indicted in FIG. 7 (Step 114). This message is displayed for a predetermined time, not so long, prompting the customer X to proceed to the second customer-use display unit 5.

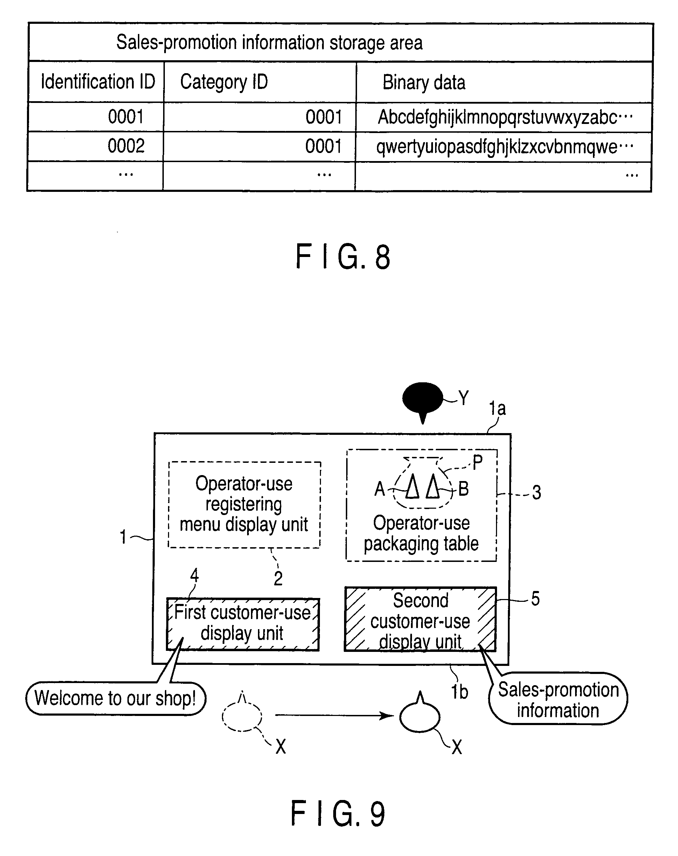

When the settlement process is thus performed, the operator-use registration menu display unit 2 is turned off, no longer displaying data as indicated by broken lines in FIG. 7 (Step 115). Of the sales-promotion information items stored in the sales-promotion information storage area of the hard disk drive 14, at least two items concerning items of merchandise A and B are selected. Of these items, one having priority over the other is read from the hard disk drive 14 (Step 116). FIG. 8 shows the format in which the sales-promotion information is stored in the sales-promotion information storage area.

When the settlement process is performed, too, the second customer-use display unit 5 is turned on, displaying the sales-promotion information read from the hard disk drive 14, as indicated in FIG. 7 (Step 117).

On finishing the settle process, the operator Y moves, standing at the operator-use packaging table 3 on which items of merchandise A and B are placed. The customer X also moves, also standing at the operator-use packaging table 3. This state is illustrated in FIG. 8. At this time, the first customer-use display unit 4 displays first guidance message "Welcome to our shop" again. This message indicates that the counter 1 is now attending to the customer C.

Now standing at the operator-use packaging table 3, the operator X takes items of merchandise A and B into a package, such as a bag P, and then hands the package to the customer Y. Thus, the items of merchandise are registered and sold.

If the card-settlement has been completed (if YES in Step 18), the process goes to Step 114, skipping step 112 of calculating the change and step 113 of displaying the change calculated. In Step 114, first customer-use display unit 4 displays the second guidance message.

As described above, one of the sales-promotion information items stored in the sales-promotion information storage area of the hard disk drive 14 is selected and displayed on the second customer-use display unit 5. Thus, various advertisement data can be displayed to the customers, without imposing so large a work load on the cashier or maintenance staff member as with the conventional, printer-type counter that has an advertisement panel.

In addition, anything solid (e.g., register or display) are not arranged on the upper surface of the counter 1, because the operator-use registration menu display unit 2, first customer-use display unit 4 and second customer-use display unit 5 are arranged flush on the upper surface of the counter 1. Therefore, nothing exists between the operator X and the customer Y. The operator X can therefore easily hand items of merchandise to the customer Y and receive cash from the customer Y. This can increase the efficiency of transaction, ultimately achieving better service to the customer. Further, this may help to increase the sales in the shop, in cooperation with the display of sales-promotion information.

In the embodiment described above, the RFID reader 18 is used as means for reading merchandise data. Nonetheless, a hand-held barcode reader may be used instead in the same way.

A sales-promotion information item is selected from those registered about various items of merchandise and is displayed in the embodiment. Nevertheless, the counter 1 may, of course, display various types of sales-promotion information, such as information items associated with the popularity ranks based on customer card numbers, information items dedicated to customers who buy much at a time, information items associated with the categories (i.e., type or classification) of items of merchandise, and information items dedicated to good customers who habitually buy non-discount merchandise.

The above description is based on the assumption that the operator-use packaging table 3 is provided on the upper surface of the counter 1. Instead, the operator-use packaging table 3 may be provided on anything other than the counter 1.

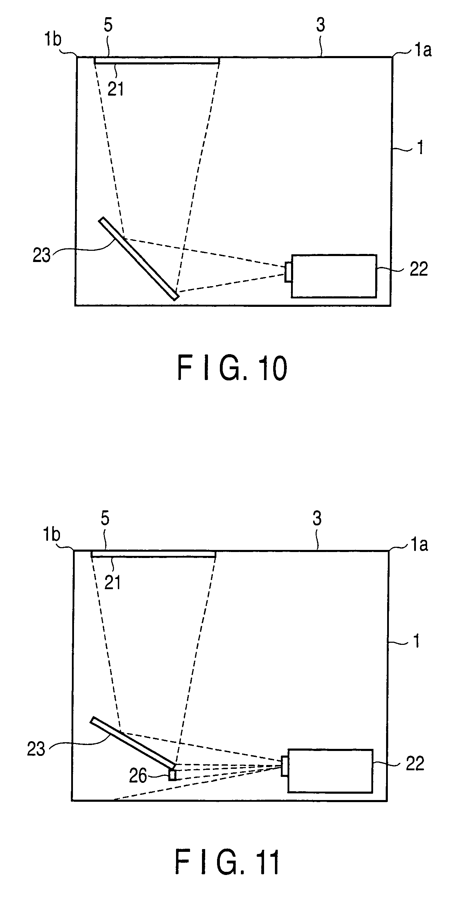

In the embodiment described above, the display units 2, 3, 4 and 5 are liquid crystal displays. Nonetheless, at leas one of the display units 2, 3, 4 and 5 may be rear-projection type display. FIG. 10 shows an example of this, and FIG. 11 shows another example thereof.

In the case of FIG. 10, the second customer-use display unit 5 is a rear-projection type display, and a transmission type screen 21 is laid on the inner side of the second customer-use display unit 5 provided on the upper surface of the counter 1. The screen 21 is, for example, a frosted-glass pane. An image is projected to the screen 21 from below. In the counter, a projector 22 and a reflector 23 are arranged below the screen 21. The projector 22 projects the image to the reflector 23. The reflector 23 reflects the image, guiding the same to the screen 21.

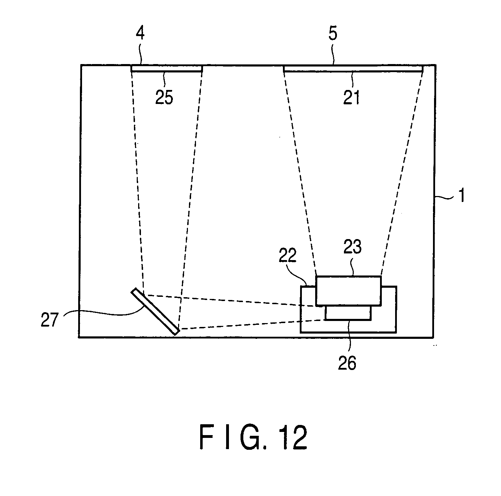

FIG. 11 and FIG. 12 show a rear-projection display that constitute both the first customer-use display unit 4 and the second customer-use display unit 5. This display has two transmission-type screens 21 and 25 laid on the inner sides of the first and second customer-use display units 4 and 5, respectively, both provided on the upper surface of the counter 1. The screens 21 and 25 are, for example, frosted-glass panes. This rear-projection display comprises a projector 22 and three reflectors 23, 26 and 27, all arranged below the screens 21 and 25. The projector 22 projects an image. The reflector 23 reflects a part of the image, guiding the same upwards to the screen 21. The reflector 26 reflects a part of the image sideways. The reflector 27 reflects that part of the image reflected by the reflector 26, guiding the same upwards to the screen 25.

The present invention is not limited to the embodiments described above. Various changes and modifications can be made, without departing from the scope and spirit of the invention.

### Industrial Applicability

The present invention can be applied to a process of registering items of merchandise at the register counters in supermarkets and the like.

## Claims

1. A counter-type merchandise registration apparatus **characterized by** comprising:
a counter having an upper surface:
an operator-use registration menu display unit of touch-panel type, provided flush with the upper surface of the counter;
a first customer-use display unit provided flush with the upper surface of the counter and configured to display guidance information for customers and information about registering items of merchandise;
a second customer-use display unit provided flush with the upper surface of the counter and configured to display sales-promotion information to customers;
storage means storing a plurality of sales-promotion information items; and
a control unit configured to select a sales-promotion information item from the storage means and to cause the second customer-use display unit to display the sales-promotion information item selected.

2. The counter-type merchandise registration apparatus according to claim 1, **characterized in that** the counter has the first customer-use display unit on the upper surface, at a position opposite to the operator-use registration menu display unit.

3. The counter-type merchandise registration apparatus according to claim 1, **characterized in that** the counter has an operator-use packaging table for facilitating packaging merchandise, on the upper surface and adjacent to the operator-use registration menu display unit.

4. The counter-type merchandise registration apparatus according to claim 3, **characterized in that** the operator-use packaging table is provided at one side of the upper surface of the counter, and the second customer-use display unit is provided at the other side of the upper surface of the counter.

5. The counter-type merchandise registration apparatus according to claim 3, **characterized in that** the upper surface of the counter has one side at which the operator may stand and another side at which the customer may stand and another side at which the customer may stand, facing the operator; the operator-use registration menu display unit and the operator-use packaging table are arranged in order along the first side of the upper surface of the counter; the first customer-use display unit and the second customer-use display unit are arranged in order along the other side of the upper surface of the counter; the first customer-use display unit lies before a customer who stands, facing an operator who stands in front of the operator-use registration menu display unit; and the second customer-use display unit lies before a customer who stands, facing the operator who stands at the packaging table.

6. The counter-type merchandise registration apparatus according to any one of claims 1 to 5, **characterized in that** each of the display units is a display device that displays data while turned on and no data while turned off.

7. The counter-type merchandise registration apparatus according to claim 6, **characterized by** further comprising control means for turning on the first customer-use display unit at all times, for turning on the operator-use registration menu display unit when the operator touches the operator-use registration menu display unit, and for turning off the operator-use registration menu display unit and turning on the second customer-use display unit when the operator performs a settlement process by operating the operator-use registration menu display unit.
